# EUROPÄISCHE PATENTSCHRIFT

(11) **EP 4 210 281 B1**
(45) Veröffentlichungstag und Bekanntmachung des Hinweises auf die Patenterteilung: **27.12.2023**
(21) Anmeldenummer: 22150959.9
(22) Anmeldetag: 11.01.2022
(51) Int. Cl.: H04L 12/18

(54) **VERFAHREN ZUM ÜBERMITTELN EINES NACHRICHTENINHALTS ZWISCHEN EINER MEHRZAHL VON KOMMUNIKATIONSTEILNEHMERN, TELEKOMMUNIKATIONSNETZ ODER SYSTEM ZUM ÜBERMITTELN EINES NACHRICHTENINHALTS ZWISCHEN EINER MEHRZAHL VON KOMMUNIKATIONSTEILNEHMERN, KOMMUNIKATIONSTEILNEHMER, COMPUTERPROGRAMM UND COMPUTERLESBARES MEDIUM**
METHOD FOR TRANSMITTING THE CONTENT OF A MESSAGE BETWEEN A PLURALITY OF PARTICIPANTS, TELECOMMUNICATION NETWORK OR SYSTEM FOR TRANSMITTING THE CONTENT OF A MESSAGE BETWEEN A PLURALITY OF PARTICIPANTS, PARTICIPANT, COMPUTER PROGRAM AND COMPUTER READABLE MEDIUM
PROCÉDÉ DE TRANSMISSION D'UN CONTENU DE MESSAGE ENTRE UNE PLURALITÉ D'ABONNÉS DE COMMUNICATION, RÉSEAU OU SYSTÈME DE TÉLÉCOMMUNICATIONS PERMETTANT DE TRANSMETTRE UN CONTENU DE MESSAGE ENTRE UNE PLURALITÉ D'ABONNÉS DE COMMUNICATION, ABONNÉ DE COMMUNICATION, PROGRAMME INFORMATIQUE ET SUPPORT LISIBLE PAR ORDINATEUR

(43) Veröffentlichungstag der Anmeldung: 12.07.2023
(73) Patentinhaber: Deutsche Telekom AG, 53113 Bonn (DE)
(72) Erfinder: SUDHOLT, Frank, 53604 Bad Honnef (DE); SCHMITT, Florian-Leon, 53227 Bonn (DE)
(74) Vertreter: Schwöbel, Thilo K.

(56) Entgegenhaltungen:
- US-A1- 2009 290 522
- US-A1- 2021 212 030
- US-A1- 2021 410 162
- "5G; Architecture enhancements for 5G System (5GS) to support Vehicle-to-Everything (V2X) services (3GPP TS 23.287 version 16.5.0 Release 16)", ETSI TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE , Bd. 3GPP SA, Nr. V16.5.0 12. Januar 2021 (2021-01-12), Seiten 1-60, XP014390294, Gefunden im Internet: URL:http://www.etsi.org/deliver/etsi_ts/12 3200_123299/123287/16.05.00_60/ts_123287v1 60500p.pdf [gefunden am 2021-01-12]

## Beschreibung

### Stand der Technik

Die Erfindung betrifft ein Verfahren zum Übermitteln eines Nachrichteninhalts zwischen einer Mehrzahl von Kommunikationsteilnehmern, wobei sowohl ein Sender als auch eine Mehrzahl von Empfängern Broadcast-Nachrichten zu senden in der Lage sind, wobei der Nachrichteninhalt wenigstens einer Broadcast-Nachricht des Senders an eine Mehrzahl von Empfängern mittels der wenigstens einen Broadcast-Nachricht mittels einer PC5-Sidelink Funktionalität, insbesondere unter Nutzung der Mode-4-Funktionalität, gesendet wird.

Die Erfindung betrifft des Weiteren ein Telekommunikationsnetz oder ein System zum Übermitteln eines Nachrichteninhalts zwischen einer Mehrzahl von Kommunikationsteilnehmern, wobei sowohl ein Sender als auch eine Mehrzahl von Empfängern Broadcast-Nachrichten zu senden in der Lage sind, wobei der Nachrichteninhalt wenigstens einer Broadcast-Nachricht des Senders an eine Mehrzahl von Empfängern mittels der wenigstens einen Broadcast-Nachricht mittels einer PC5-Sidelink Funktionalität, insbesondere unter Nutzung der Mode-4-Funktionalität, gesendet wird.

Die Erfindung betrifft ferner einen Kommunikationsteilnehmer, insbesondere Sender oder Empfänger zur Verwendung in einem erfindungsgemäßen Telekommunikationsnetz oder in einem erfindungsgemäßen System.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Bei vorbekannten Telekommunikationsnetzen ist es bereits bekannt, eine Gerät-zu-Gerät-Kommunikation (device-to-device communication) zu verwenden. Dies ist auch der Fall bei der zellularen V2X-Kmmunikation (C-V2X), welche die Möglichkeit zur Verfügung stellt, dass Kommunikationsteilnehmer bzw. Verkehrsteilnehmer Nachrichten authentisch bzw. autorisiert, anonym, sowie direkt (d.h. ohne Einbindung des Mobilfunknetzes, insbesondere über die PC5 Sidelink Funktionalität) in einer begrenzten Umgebung austauschen, insbesondere um Hauptanwendungsfälle wie Verkehrssicherheit, Verkehrsmanagement und Infotainment umsetzen zu können.

Hierbei kann die Situation auftreten, dass mehr als eine Gruppe von solchen Kommunikationsteilnehmer bzw. Verkehrsteilnehmer in der begrenzten räumlichen Umgebung bzw. einem geographischen Gebiet vorhanden sind bzw. existieren, was zur Folge haben kann, dass Nachrichten bzw. Nachrichteninhalte identisch oder fast identisch mehrfach gesendet werden, was einen vergleichsweise hohen Aufwand darstellt und sich insbesondere auch nachteilig auf die verfügbaren Funkressourcen auswirkt.

US 2021/410162 A1 beschreibt das Übertragen von V2X-Informationen z. B. über Groupcast-Übertragungsschemata, um z. B. eine Hinderniswarnung bereitzustellen. Das Gruppenführungs-UE kann Gruppenmitglieder über eine dem Anwendungsfall zugeordnete Dienst-ID, Ziel-ID und Gruppen-ID informieren.

US 2009/290522 A1 beschreibt, dass Kommunikationsgruppen von einem Initiatorknoten vorübergehend eingerichtet werden, indem eine Broadcast-Nachricht, die mindestens eine Gruppenkennung, eine Kennung des Initiatorknotens, Informationen über die Kommunikationsgruppe und eine Adresse des Initiatorknotens enthält, an alle verbundenen Knoten gesendet wird. Knoten, die an der Kommunikationsgruppe teilnehmen, senden eine Unicast-Nachricht an den Initiatorknoten zurück.

### Offenbarung der Erfindung

Der Erfindung liegt die Aufgabe zugrunde, ein Verfahren zum Übermitteln eines Nachrichteninhalts zwischen einer Mehrzahl von Kommunikationsteilnehmern bereitzustellen, wobei die Mehrzahl von Kommunikationsteilnehmern eine erste Gruppe von Kommunikationsteilnehmern und eine zweite Gruppe von Kommunikationsteilnehmern umfasst, wobei es das Verfahren in vergleichsweise einfacher und effizienter Weise ermöglicht, die Kommunikation innerhalb der Gruppen von Kommunikationsteilnehmern effizienter zu gestalten.

Die Aufgabe wird erfindungsgemäß gelöst durch ein Verfahren zum Übermitteln eines Nachrichteninhalts zwischen einer Mehrzahl von Kommunikationsteilnehmern, wobei sowohl ein Sender als auch eine Mehrzahl von Empfängern Broadcast-Nachrichten zu senden in der Lage sind, wobei der Nachrichteninhalt wenigstens einer Broadcast-Nachricht des Senders an eine Mehrzahl von Empfängern mittels der wenigstens einen Broadcast-Nachricht mittels einer PC5-Sidelink Funktionalität, insbesondere unter Nutzung der Mode-4-Funktionalität, gesendet wird, wobei die Mehrzahl von Kommunikationsteilnehmern eine erste Gruppe von Kommunikationsteilnehmern und eine zweite Gruppe von Kommunikationsteilnehmern umfasst, wobei in jeder Gruppe von Kommunikationsteilnehmern eine Mehrzahl an Broadcast-Nachrichten zwischen den Kommunikationsteilnehmern gesendet und empfangen werden, wobei die Mehrzahl dieser Broadcast-Nachrichten Teil einer Nachrichten-Session von Broadcast-Nachrichten mit einer Sessions-Kennungsinformation ist, wobei die erste Gruppe von Kommunikationsteilnehmern eine erste Sessions-Kennungsinformation und die zweite Gruppe von Kommunikationsteilnehmern eine zweite Sessions-Kennungsinformation aufweist,
wobei das Verfahren zum Übermitteln des Nachrichteninhalts für den Fall einer Übermittlung des gleichen Nachrichteninhalts sowohl in der ersten Gruppe von Kommunikationsteilnehmern als auch in der zweiten Gruppe von Kommunikationsteilnehmern die nachfolgenden Schritte umfasst:
-- in einem ersten Schritt erkennt der Sender, dass der gleiche Nachrichteninhalt oder ein Nachrichteninhalt betreffend ein gleiches Nachrichtenthema sowohl in der ersten Gruppe von Kommunikationsteilnehmern als auch in der zweiten Gruppe von Kommunikationsteilnehmern zu übertragen ist, und generiert eine dritte Sessions-Kennungsinformation,
-- in einem dem ersten Schritt nachfolgenden zweiten Schritt sendet der Sender mittels einer weiteren Broadcast-Nachricht eine Startnachricht umfassend die erste Sessions-Kennungsinformation, die zweite Sessions-Kennungsinformation und die dritte Sessions-Kennungsinformation,
-- in einem dem zweiten Schritt nachfolgenden dritten Schritt senden die Kommunikationsteilnehmer sowohl der ersten als auch der zweiten Gruppe von Kommunikationsteilnehmern jeweils eine Teilnahmenachricht, welche die dritte Sessions-Kennungsinformation umfasst.

Es ist dadurch gemäß der vorliegenden Erfindung in vorteilhafter Weise möglich, dass in vergleichsweise einfacher Art und Weise bei einer Mehrzahl von Kommunikationsteilnehmern mit einer ersten und einer zweiten Gruppe von Kommunikationsteilnehmern die Kommunikation innerhalb der Gruppen von Kommunikationsteilnehmern effizienter gestaltet werden kann. Dies erfolgt erfindungsgemäß insbesondere dadurch, dass die Verschmelzung von zwei (oder auch von mehr als zwei) Gruppen einer V2X-Anwendung möglich ist oder aber auch durch Bildung einer Obergruppe zu (zwei oder mehr als zwei) existierenden Gruppen (wobei diese existierenden Gruppen beibehalten werden), um insbesondere die Anzahl der zu versendenden Nachrichten und die Datenmenge zu minimieren

Erfindungsgemäß ist es somit insbesondere vorgesehen, für V2X-Anwendungen, d.h. für die V2X-Kommunikation bzw. die entsprechenden V2X Anwendungsfälle, eine Session-basierte Kommunikation innerhalb einer Gruppe von Kommunikationsteilnehmern bzw. Verkehrsteilnehmern zu ermöglichen und hierfür ein entsprechendes Management von Gruppen von Kommunikationsteilnehmern (V2X-Gruppen) bzw. ein Session-Management zu implementieren. Insbesondere umfasst erfindungsgemäß ein solches V2X-Gruppen-Management die nachfolgenden Funktionen oder zumindest einen Teil dieser Funktionen:
-- das Aufsetzen bzw. die Bildung einer Gruppe (bzw. einer Kommunikations-Session),
-- das Aufnehmen bzw. das Abmelden von Teilnehmern (alternativ hierzu ist es jedoch auch erfindungsgemäß möglich, dass eine Gruppe von Kommunikationsteilnehmer als eine offene Gruppe existiert, bei der alle Verkehrsteilnehmer (bzw. Kommunikationsteilnehmer) im Umkreis beliebig teilnehmen können),
-- das Adressieren von Nachrichten an bestimmte Teilnehmer der Gruppe,
-- das Beenden einer Gruppe (bzw. einer Kommunikations-Session),
-- das Zusammenführen bzw. das Verschmelzen von mehreren Gruppen zu einer Gruppe (wobei hierbei existierende Gruppen beendet werden) bzw. das Bilden einer Obergruppe zu existierenden Gruppen (wobei existierende Gruppen beibehalten werden).

In der Regel bzw. häufig - jedoch nicht zwingend - werden die V2X Anwendungsfälle bzw. V2X-Anwendungen für Gruppen
-- in einem festen Umkreis, d.h. um einen festen Punkt / stationären Verkehrsteilnehmer herum, umgesetzt werden (bei sich bewegenden VT wird sich die Gruppe während der Session kaum in einem Umkreis (Sendebereich) aufhalten) und
-- es wird ein Verkehrsteilnehmer, meist der Initiator (nachfolgend auch als Sender bezeichnet), eine exponierte Position in der Gruppe einnehmen und, so dass dieser für das Gruppen-Management prädestiniert ist.
Beispiele für mögliche Gruppen-V2X-Anwendungen sind Abfertigungsstationen wie Zoll, Grenzen, Mautstationen oder Fähren bzw. Punkte mit stehendem Verkehr wie Sperrungen, Staus oder Schranken. Dort ist es erfindungsgemäß bevorzugt möglich, dass Gruppen, beispielsweise zum Informationssautausch wie für Wetter-/Verkehrsbedingungen, Wartezeiten, Unterhaltung oder Erfahrungsberichte, gebildet werden. Verschiedene Gruppen sind in einem solchen Fall in dem betrachteten Umkreis (d.h. in der Regel der Sendereichweite) dann sinnvoll, wenn unterschiedliche Teilnehmerkategorien vorhanden sind, beispielsweise thematisch zu unterscheidende Gruppen von Verkehrsteilnehmern wie etwa PKW vs. LKW oder autonome vs. nichtautonome Verkehrsteilnehmer. Erfindungsgemäß wird das Gruppenmanagement dadurch realisiert, dass bei Bedarf Gruppen zusammengeführt werden, um doppelten Informationsfluss, d.h. vielfache (Broadcast) Nachrichten mit gleichen Informationen, zu vermeiden. Ein solches Management von Gruppen von Kommunikationsteilnehmern für PC5 Sidelink Kommunikation oder für die Kommunikation innerhalb einer Gruppe ist im Standard für V2X-Kommunikation nicht spezifiziert.

Insbesondere wird erfindungsgemäß davon ausgegangen, dass eine V2X-Gruppe in einem festen Umkreis kommuniziert, d.h. um einen festen Punkt bzw. stationären Verkehrsteilnehmer herum, d.h. es wird angenommen, dass alle Gruppenteilnehmer grundsätzlich alle Nachrichten empfangen.

Ferner wird erfindungsgemäß insbesondere davon ausgegangen, dass der Initiator der V2X-Gruppe eine exponierte Position bzw. Stellung in der Gruppe hat und als Gruppenmanager fungiert.

Das erfindungsgemäße Verfahren bezieht sich auf die Übermittlung eines Nachrichteninhalts zwischen einer Mehrzahl von Kommunikationsteilnehmern. Sowohl ein Sender als auch eine Mehrzahl von Empfängern sind in der Lage Broadcast-Nachrichten zu senden. Der Nachrichteninhalt wenigstens einer Broadcast-Nachricht des Senders an eine Mehrzahl von Empfängern mittels der wenigstens einen Broadcast-Nachricht wird mittels einer PC5-Sidelink Funktionalität, insbesondere unter Nutzung der Mode-4-Funktionalität, gesendet.

Erfindungsgemäß umfasst die Mehrzahl von Kommunikationsteilnehmern eine erste Gruppe von Kommunikationsteilnehmern und eine zweite Gruppe von Kommunikationsteilnehmern, wobei in jeder Gruppe von Kommunikationsteilnehmern eine Mehrzahl an Broadcast-Nachrichten zwischen den Kommunikationsteilnehmern gesendet und empfangen werden und wobei die Mehrzahl dieser Broadcast-Nachrichten Teil einer Nachrichten-Session von Broadcast-Nachrichten mit einer Sessions-Kennungsinformation ist. Die erste Gruppe von Kommunikationsteilnehmern weist dabei eine erste Sessions-Kennungsinformation und die zweite Gruppe von Kommunikationsteilnehmern weist eine zweite Sessions-Kennungsinformation auf.

Das erfindungsgemäße Verfahren weist nun zum Übermitteln des Nachrichteninhalts (oder eines Nachrichteninhalts betreffend ein gleiches Nachrichtenthema) für den Fall einer Übermittlung des gleichen Nachrichteninhalts sowohl in der ersten Gruppe von Kommunikationsteilnehmern als auch in der zweiten Gruppe von Kommunikationsteilnehmern die nachfolgenden Schritte auf:
-- in einem ersten Schritt erkennt der Sender, dass der gleiche Nachrichteninhalt oder ein Nachrichteninhalt betreffend ein gleiches Nachrichtenthema sowohl in der ersten Gruppe von Kommunikationsteilnehmern als auch in der zweiten Gruppe von Kommunikationsteilnehmern zu übertragen ist, und generiert eine dritte Sessions-Kennungsinformation,
-- in einem dem ersten Schritt nachfolgenden zweiten Schritt sendet der Sender mittels einer weiteren Broadcast-Nachricht eine Startnachricht umfassend die erste Sessions-Kennungsinformation, die zweite Sessions-Kennungsinformation und die dritte Sessions-Kennungsinformation,
-- in einem dem zweiten Schritt nachfolgenden dritten Schritt senden die Kommunikationsteilnehmer sowohl der ersten als auch der zweiten Gruppe von Kommunikationsteilnehmern jeweils eine Teilnahmenachricht, welche die dritte Sessions-Kennungsinformation umfasst. Hierdurch ist es erfindungsgemäß vorteilhaft möglich, die Kommunikationsteilnehmer sowohl der ersten Gruppe von Kommunikationsteilnehmern als auch der zweiten Gruppe von Kommunikationsteilnehmern gemeinsam zu behandeln, insbesondere als dritte Gruppe von Kommunikationsteilnehmern.

Gemäß einer bevorzugten Ausführungsform der vorliegenden Erfindung ist es bevorzugt vorgesehen, dass mittels der dritten Sessions-Kennungsinformation eine dritte Gruppe von Kommunikationsteilnehmern referenziert wird, wobei die dritte Gruppe von Kommunikationsteilnehmer die Kommunikationsteilnehmer der ersten und der zweiten Gruppe von Kommunikationsteilnehmer umfasst.

Hierdurch ist es erfindungsgemäß vorteilhaft möglich, dass in vergleichsweise einfacher Art und Weise entweder eine Verschmelzung zweier Gruppen (oder von mehr als zwei Gruppen) vorgenommen bzw. realisiert werden kann oder aber auch eine Obergruppe gebildet werden kann, wobei die vormals bestehenden Gruppen trotz der Bildung bzw. Existenz der Obergruppe weiterhin bestehen bleiben können.

Gemäß einer weiteren Ausführungsform der vorliegenden Erfindung ist es bevorzugt vorgesehen, dass die Erkennung, dass der gleiche Nachrichteninhalt sowohl in der ersten Gruppe von Kommunikationsteilnehmern als auch in der zweiten Gruppe von Kommunikationsteilnehmern zu übertragen ist, anhand einer gleichen oder ähnlichen Dienste-Kennungsinformation der ersten und zweiten Gruppe von Kommunikationsteilnehmern erfolgt.

Hierdurch ist es erfindungsgemäß in vorteilhafter Weise möglich, dass in einfacher Weise, insbesondere anhand einer gleichen oder ähnlichen Dienste-Kennungsinformation der ersten und zweiten Gruppe von Kommunikationsteilnehmern, die Entscheidung zur Verschmelzung von Gruppen oder zur Bildung einer Obergruppe für mehrere Gruppen getroffen werden kann.

Gemäß einer weiteren Ausführungsform der vorliegenden Erfindung ist es bevorzugt vorgesehen, dass nach dem dritten Schritt die dritte Gruppe von Kommunikationsteilnehmer sowohl neben der ersten Gruppe von Kommunikationsteilnehmern als auch neben der zweiten Gruppe von Kommunikationsteilnehmern vorliegt.

Hierdurch ist es erfindungsgemäß insbesondere vorteilhaft möglich, dass Redundanzen von Nachrichten möglichst weitgehend vermieden werden und Kommunikation zielgerichtet erfolgt, indem Nachrichten sowohl in der ersten Gruppe von Kommunikationsteilnehmer als auch in der zweiten und dritten Gruppe (Obergruppe) von Kommunikationsteilnehmer kommuniziert werden.

Gemäß einer weiteren Ausführungsform der vorliegenden Erfindung ist es bevorzugt vorgesehen, dass nach dem dritten Schritt die dritte Gruppe von Kommunikationsteilnehmer vorliegt und sowohl die erste Gruppe von Kommunikationsteilnehmern als auch die zweite Gruppe von Kommunikationsteilnehmern gelöscht oder aufgelöst ist.

Hierdurch ist es gemäß einer solchen Ausführungsform der Erfindung vorteilhaft möglich, dass das Gruppenmanagement vereinfacht werden kann durch die Löschung bzw. Beendigung der vormalig vorhandenen Gruppen, d.h. der ersten und zweiten Gruppe.

Gemäß einer weiteren Ausführungsform der vorliegenden Erfindung ist es bevorzugt vorgesehen, dass der Sender ein stationärer Sender, insbesondere eine Mautstation oder eine Zollstation oder eine sonstige Einrichtung, ist, und dass die Empfänger mobile Verkehrsteilnehmer sind.

Des Weiteren wird die Aufgabe gelöst durch ein System zum Übermitteln eines Nachrichteninhalts zwischen einer Mehrzahl von Kommunikationsteilnehmern, wobei sowohl ein Sender als auch eine Mehrzahl von Empfängern Broadcast-Nachrichten zu senden in der Lage sind, wobei der Nachrichteninhalt wenigstens einer Broadcast-Nachricht des Senders an eine Mehrzahl von Empfängern mittels der wenigstens einen Broadcast-Nachricht mittels einer PC5-Sidelink Funktionalität, insbesondere unter Nutzung der Mode-4-Funktionalität, gesendet wird, wobei die Mehrzahl von Kommunikationsteilnehmern eine erste Gruppe von Kommunikationsteilnehmern und eine zweite Gruppe von Kommunikationsteilnehmern umfasst, wobei in jeder Gruppe von Kommunikationsteilnehmern eine Mehrzahl an Broadcast-Nachrichten zwischen den Kommunikationsteilnehmern gesendet und empfangen werden, wobei die Mehrzahl dieser Broadcast-Nachrichten Teil einer Nachrichten-Session von Broadcast-Nachrichten mit einer Sessions-Kennungsinformation ist, wobei die erste Gruppe von Kommunikationsteilnehmern eine erste Sessions-Kennungsinformation und die zweite Gruppe von Kommunikationsteilnehmern eine zweite Sessions-Kennungsinformation aufweist, wobei das System derart konfiguriert ist, dass für den Fall einer Übermittlung des gleichen Nachrichteninhalts sowohl in der ersten Gruppe von Kommunikationsteilnehmern als auch in der zweiten Gruppe von Kommunikationsteilnehmern:
-- der Sender erkennt, dass der gleiche Nachrichteninhalt sowohl in der ersten Gruppe von Kommunikationsteilnehmern als auch in der zweiten Gruppe von Kommunikationsteilnehmern zu übertragen ist, und eine dritte Sessions-Kennungsinformation generiert,
-- der Sender mittels einer weiteren Broadcast-Nachricht eine Startnachricht umfassend die erste Sessions-Kennungsinformation, die zweite Sessions-Kennungsinformation und die dritte Sessions-Kennungsinformation sendet, und
-- die Kommunikationsteilnehmer sowohl der ersten als auch der zweiten Gruppe von Kommunikationsteilnehmern jeweils eine Teilnahmenachricht senden, welche die dritte Sessions-Kennungsinformation umfasst.

Es ist dadurch gemäß der vorliegenden Erfindung in vorteilhafter Weise möglich, ein zum erfindungsgemäßen Verfahren korrespondierendes erfindungsgemäßes Telekommunikationsnetz oder System bereitzustellen.

Des Weiteren wird die Aufgabe gelöst durch einen Kommunikationsteilnehmer in Form eines Senders und eines Empfängers, ausgestattet die Schritte des erfindungsgemäßen Verfahrens durchzuführen.

Des Weiteren wird die Aufgabe gelöst durch ein Computerprogramm umfassend Befehle zur Durchführung der Schritte des erfindungsgemäßen Verfahrens, wenn das Computerprogramm auf einem Netzknoten in Form eines Senders und eines Empfängers ausgeführt wird.

Des Weiteren wird die Aufgabe gelöst durch ein computerlesbares Medium, das erfindungsgemäße Computerprogramm speichernd oder ein Datenträgersignal, das erfindungsgemäße Computerprogramm tragend.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung.

### Kurze Beschreibung der Zeichnungen

- **Figur 1**: zeigt eine schematische Situation einer Mehrzahl von Kommunikationsteilnehmern innerhalb eines Sendegebiets bzw. Funkabdeckungsbereichs eines der Kommunikationsteilnehmer, wobei die Mehrzahl von Kommunikationsteilnehmern eine erste Gruppe von Kommunikationsteilnehmern und eine zweite Gruppe von Kommunikationsteilnehmern umfasst, wobei in jeder Gruppe von Kommunikationsteilnehmern eine Mehrzahl an Broadcast-Nachrichten zwischen den Kommunikationsteilnehmern gesendet und empfangen werden können.
- **Figur 2**: zeigt schematisch ein Kommunikationsdiagramm zur Durchführung und zur Veranschaulichung einer ersten Variante des erfindungsgemäßen Verfahrens.
- **Figur 3**: zeigt schematisch ein Kommunikationsdiagramm zur Beendigung einer Gruppe von Kommunikationsteilnehmern.
- **Figur 4**: zeigt schematisch ein Kommunikationsdiagramm zur Durchführung und zur Veranschaulichung einer zweiten Variante des erfindungsgemäßen Verfahrens.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequenziellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

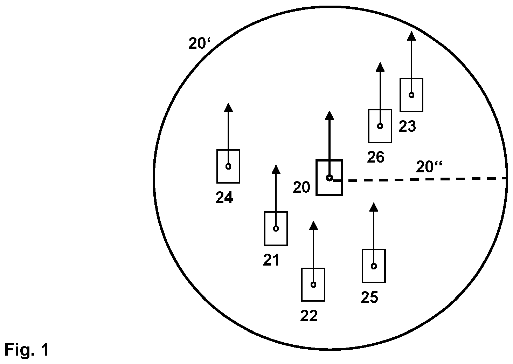

In Figur 1 ist schematisch eine Situation einer Mehrzahl von Kommunikationsteilnehmern 20, 21, 22, 23, 24, 25, 26 innerhalb eines Sendegebiets 20' bzw. Funkabdeckungsbereichs 20' eines der Kommunikationsteilnehmer (nämlich des Kommunikationsteilnehmers 20) dargestellt (d.h. die Kommunikationsteilnehmer 20, 21, 22, 23, 24, 25, 26 befinden sich in räumlicher Nähe zueinander). Das Bezugszeichen 20" gibt schematisch den ungefähren Radius des (im Wesentlichen kreisförmig gedachten) Funkabdeckungsbereichs 20' an. Der Funkabdeckungsbereich 20' kann als derjenige räumliche Bereich angesehen werden, innerhalb dessen von diesem Kommunikationsteilnehmer 20 ausgesandte bzw. abgestrahlte Funksignale, insbesondere umfassend Broadcast-Nachrichten, noch eine Signalstärke bzw. Signaleigenschaften derart aufweisen, dass die anderen Kommunikationsteilnehmer 21, 22, 23, 24, 25, 26 diese empfangen und verarbeiten, d.h. ggf. prozessieren und/oder entschlüsseln, können. Die Mehrzahl von Kommunikationsteilnehmern 20, 21, 22, 23, 24, 25, 26 umfasst eine erste Gruppe von Kommunikationsteilnehmern und eine zweite Gruppe von Kommunikationsteilnehmern (bzw. kann einer ersten bzw. zweiten Gruppe von Kommunikationsteilnehmern zugeordnet werden); die verschiedenen Gruppen von Kommunikationsteilnehmern sind jedoch in Figur 1 der Einfachheit halber nicht eigens kenntlich gemacht. Es soll angenommen werden, dass die erste Gruppe von Kommunikationsteilnehmern einen ersten Kommunikationsteilnehmer 20, einen zweiten Kommunikationsteilnehmer 21, einen dritten Kommunikationsteilnehmer 22 und einen vierten Kommunikationsteilnehmer 23 umfasst, während die zweite Gruppe von Kommunikationsteilnehmern den ersten Kommunikationsteilnehmer 20, einen fünften Kommunikationsteilnehmer 24, einen sechsten Kommunikationsteilnehmer 25 und einen siebten Kommunikationsteilnehmer 26 umfasst. Hinsichtlich ihrer prinzipiellen Kommunikationsfähigkeiten ist es erfindungsgemäß nicht ausgeschlossen, dass sich die Kommunikationsteilnehmer 20, 21, 22, 23, 24, 25, 26 voneinander unterscheiden, insbesondere ist es in einem solchen Fall vorgesehen, dass der erste Kommunikationsteilnehmer 20 über mehr Kommunikationsmöglichkeiten bzw. über mehr oder größere Rechte hinsichtlich der Kommunikation innerhalb der ersten Gruppe und/oder innerhalb der zweiten Gruppe verfügt (d.h. ein Kommunikationsteilnehmer bzw. Verkehrsteilnehmer - meist der Initiator und nachfolgend auch als Sender 20 bezeichnet - nimmt eine exponierte Position in der Gruppe ein, so dass dieser für das Gruppen-Management prädestiniert ist); jedoch muss dies (dass sich die Kommunikationsteilnehmer 20, 21, 22, 23, 24, 25, 26 voneinander unterscheiden) nicht zwingend der Fall sein, d.h. in einem solchen Fall ist es vorgesehen, dass sowohl der erste Kommunikationsteilnehmer 20 als auch die anderen Kommunikationsteilnehmer 21, 22, 23, 24, 25, 26 die gleichen Rechte hinsichtlich der Kommunikation untereinander haben. Im Folgenden wird lediglich begrifflich der erste Kommunikationsteilnehmer 20 (als Mitglied sowohl der ersten als auch der zweiten Gruppe von Kommunikationsteilnehmern) auch als Sender 20 bezeichnet und es werden die anderen Kommunikationsteilnehmer 21, 22, 23, 24, 25, 26 auch als Empfänger bezeichnet.

In jeder der Gruppen von Kommunikationsteilnehmern ist es erfindungsgemäß vorgesehen bzw. möglich, dass eine Mehrzahl an Broadcast-Nachrichten zwischen den Kommunikationsteilnehmern gesendet und empfangen werden, so dass Nachrichteninhalte bzw. wenigstens ein Nachrichteninhalt zwischen den Kommunikationsteilnehmern 20, 21, 22, 23, 24, 25, 26 mittels solcher Broadcast-Nachrichten übertragen bzw. übermittelt werden kann oder können, insbesondere der Nachrichteninhalt wenigstens einer Broadcast-Nachricht des Senders 20 an eine Mehrzahl von Empfängern 21, 22, 23, 24, 25, 26 unter Nutzung einer PC5-Sidelink Funktionalität, insbesondere unter Nutzung der Mode-4-Funktionalität. Die Mehrzahl dieser Broadcast-Nachrichten innerhalb der verschiedenen Gruppen von Kommunikationsteilnehmern sind erfindungsgemäß jeweils Teil einer Nachrichten-Session von Broadcast-Nachrichten mit einer Sessions-Kennungsinformation; hierbei verfügt die erste Gruppe von Kommunikationsteilnehmern 20, 21, 22, 23 über eine erste Sessions-Kennungsinformation (bzw. innerhalb der ersten Gruppe von Kommunikationsteilnehmern 20, 21, 22, 23 wird die erste Sessions-Kennungsinformation genutzt) und die zweite Gruppe von Kommunikationsteilnehmern 20, 24, 25, 26 verfügt über eine zweite Sessions-Kennungsinformation (bzw. innerhalb der zweiten Gruppe von Kommunikationsteilnehmern 20, 24, 25, 26 wird die zweite Sessions-Kennungsinformation genutzt).

Erfindungsgemäß umfasst das Verfahren zum Übermitteln des Nachrichteninhalts für den Fall einer Übermittlung des gleichen Nachrichteninhalts sowohl in der ersten Gruppe von Kommunikationsteilnehmern 20, 21, 22, 23 als auch in der zweiten Gruppe von Kommunikationsteilnehmern 20, 24, 25, 26 die nachfolgenden Schritte:
-- in einem ersten Schritt erkennt der Sender 20, dass der gleiche Nachrichteninhalt oder ein Nachrichteninhalt betreffend ein gleiches Nachrichtenthema sowohl in der ersten Gruppe von Kommunikationsteilnehmern 20, 21, 22, 23 als auch in der zweiten Gruppe von Kommunikationsteilnehmern 20, 24, 25, 26 zu übertragen ist, und generiert eine dritte Sessions-Kennungsinformation,
-- in einem dem ersten Schritt nachfolgenden zweiten Schritt sendet der Sender 20 mittels einer weiteren Broadcast-Nachricht eine Startnachricht umfassend die erste Sessions-Kennungsinformation, die zweite Sessions-Kennungsinformation und die dritte Sessions-Kennungsinformation,
-- in einem dem zweiten Schritt nachfolgenden dritten Schritt senden die Kommunikationsteilnehmer sowohl der ersten als auch der zweiten Gruppe von Kommunikationsteilnehmern jeweils eine Teilnahmenachricht, welche die dritte Sessions-Kennungsinformation umfasst.

Insbesondere ist es erfindungsgemäß vorteilhafterweise vorgesehen, dass mittels der dritten Sessions-Kennungsinformation eine dritte Gruppe von Kommunikationsteilnehmern referenziert wird, wobei die dritte Gruppe von Kommunikationsteilnehmer die Kommunikationsteilnehmer der ersten und der zweiten Gruppe von Kommunikationsteilnehmer 20, 21, 22, 23, 24, 25, 26 umfasst. Hierbei ist es insbesondere vorgesehen, dass durch Schaffung bzw. Initiierung der dritten Gruppe von Kommunikationsteilnehmern die erste und zweite Gruppe von Kommunikationsteilnehmern gemäß einer ersten erfindungsgemäßen Variante verschmolzen werden bzw. gemäß einer zweiten erfindungsgemäßen Variante eine Obergruppe gebildet wird.

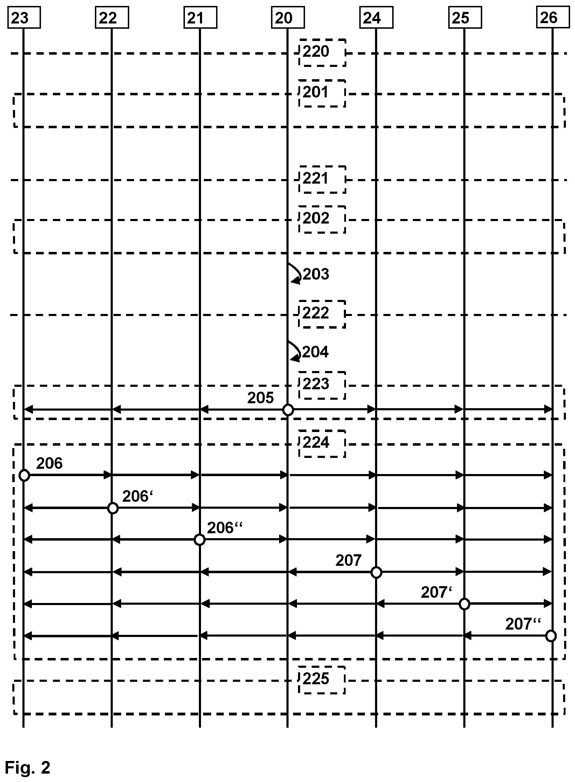

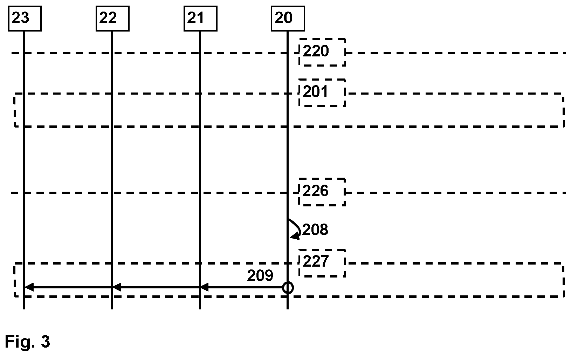

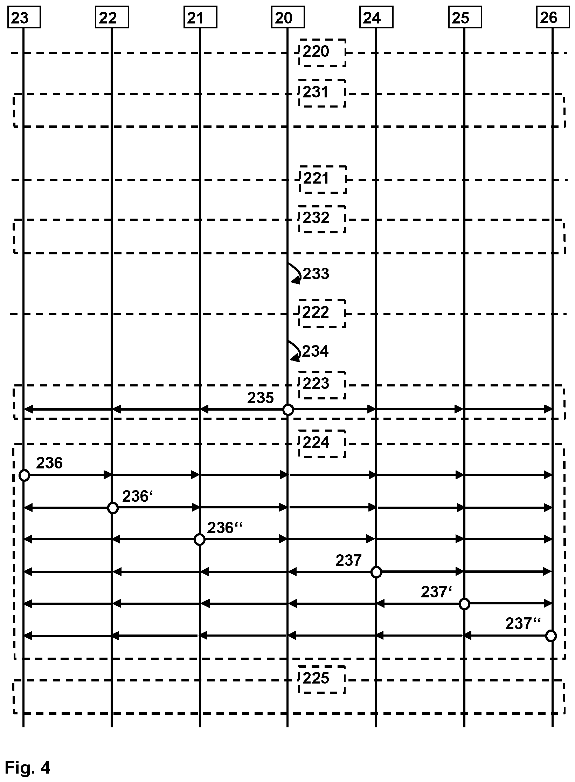

In Figur 2 ist schematisch ein Kommunikationsdiagramm dargestellt, welches die Durchführung des erfindungsgemäßen Verfahrens gemäß der ersten Variante veranschaulicht (Verschmelzung von (wenigstens) zwei Gruppen von Kommunikationsteilnehmern), während Figur 4 schematisch ein Kommunikationsdiagramm zur Durchführung des erfindungsgemäßen Verfahrens gemäß der zweiten Variante zeigt (Bildung einer Obergruppe bezüglich (wenigstens) zwei Gruppen von Kommunikationsteilnehmern). Die Kommunikationsdiagramme zeigen hierbei jeweils die Kommunikation zwischen dem ersten Kommunikationsteilnehmer 20, dem zweiten Kommunikationsteilnehmer 21, dem dritten Kommunikationsteilnehmer 22, dem vierten Kommunikationsteilnehmer 23, dem fünften Kommunikationsteilnehmer 24, dem sechsten Kommunikationsteilnehmer 25 sowie dem siebten Kommunikationsteilnehmer 26. Figur 3 zeigt schematisch ein Kommunikationsdiagramm zur Beendigung einer Gruppe von Kommunikationsteilnehmern (am Beispiel der ersten Gruppe von Kommunikationsteilnehmern).

Generell gliedert sich die Kommunikation bzw. das Kommunikationsdiagramm des erfindungsgemäßen Verfahrens gemäß sämtlicher Varianten desselben, d.h. sowohl gemäß der Figur 2 als auch gemäß der Figur 4, im Wesentlichen in die verschiedenen Abschnitte 220, 221 und 222. Im ersten Abschnitt 220 werden beim beispielhaften Verfahren gemäß beider Figuren 2 und 4 hierbei (gemäß sämtlicher Varianten des erfindungsgemäßen Verfahrens) die Voraussetzungen für die erfindungsgemäße Übermittlung eines Nachrichteninhalts geschaffen, insbesondere die beiden Gruppen von Kommunikationsteilnehmern geschaffen bzw. aufgesetzt.

Der zweite Abschnitt 221 umfasst (gemäß sämtlicher Varianten des erfindungsgemäßen Verfahrens) den Trigger bzw. den Anstoß zur Generierung der dritten Sessions-Kennungsinformation.

Der dritte Abschnitt 222 umfasst (gemäß sämtlicher Varianten des erfindungsgemäßen Verfahrens) den technischen Prozess und die operative Durchführung des Verfahrens, insbesondere umfassend einen ersten Unterabschnitt 223, gemäß dem mittels der Startnachricht sowie mittels der dritten Sessions-Kennungsinformation die dritte Gruppe von Kommunikationsteilnehmern referenziert wird, wobei die dritte Gruppe von Kommunikationsteilnehmer die Kommunikationsteilnehmer der ersten und der zweiten Gruppe von Kommunikationsteilnehmer 20, 21, 22, 23, 24, 25, 26 umfasst, nachdem diese - in einem zweiten Unterabschnitt 224 des dritten Abschnitts 222 sowie mittels jeweils einer Teilnahmenachricht - Teil der dritten Gruppe von Kommunikationsteilnehmer geworden sind (bzw. ihre Teilnahme erklärt bzw. signalisiert haben). In einem dritten Unterabschnitt 225 des dritten Abschnitts 222 wird anschließend die Kommunikation bzw. der Austausch oder die Übermittlung von Nachrichteninhalten zwischen den Kommunikationsteilnehmern 20, 21, 22, 23, 24, 25, 26 operativ durchgeführt.

Nachfolgend wird anhand der Figur 2 und einer Reihe verschiedener Prozessschritte die erste Variante des erfindungsgemäßen Verfahrens im Detail beschrieben:
In einem ersten Prozessschritt 201 wird als Teil des ersten Abschnitts 220 zunächst vorausgesetzt, dass die erste Gruppe von Kommunikationsteilnehmern 20, 21, 22, 23 (beispielsweise eine Gruppe von Personenkraftwagen-Verkehrsteilnehmern oder auch PKW-Gruppe) und die zweite Gruppe von Kommunikationsteilnehmern 20, 24, 25, 26 (beispielsweise eine Gruppe von Lastkraftwagen-Verkehrsteilnehmern oder auch LKW-Gruppe) existieren bzw. aufgesetzt sind, d.h. es ist erforderlich, die Grundlagen bzw. Grundvoraussetzungen zu schaffen, damit die Kommunikation der Kommunikationsteilnehmer 20, 21, 22, 23, 24, 25, 26 in ihren jeweiligen Gruppen erfolgen kann. Hierbei ist es im ersten Prozessschritt 201 oder als Teil des ersten Prozessschrittes 201 insbesondere vorgesehen, dass mittels einer jeweiligen Startnachricht diese Gruppen erzeugt bzw. gebildet werden sowie mittels jeweiliger Teilnahmenachrichten der entsprechenden Kommunikationsteilnehmer Gruppenmitglieder reagieren. Insbesondere ist es erfindungsgemäß bevorzugt (jedoch nicht zwingend notwendig), dass eine Dienste-Kennungsinformation, welche insbesondere spezifisch für die V2X-Anwendung ist, zwischen den Kommunikationsteilnehmern 20, 21, 22, 23, 24, 25, 26 innerhalb der jeweiligen Gruppen von Kommunikationsteilnehmern verwendet wird. Der erste Abschnitt 220 ist damit beendet; es beginnt der zweite Abschnitt 221.

Im zweiten Abschnitt 221 erkennt in einem zweiten Prozessschritt 202 der Sender 20 (bzw. einer der Kommunikationsteilnehmer), dass der gleiche Nachrichteninhalt oder ein Nachrichteninhalt betreffend ein gleiches Nachrichtenthema sowohl in der ersten Gruppe von Kommunikationsteilnehmern 20, 21, 22, 23 als auch in der zweiten Gruppe von Kommunikationsteilnehmern 20, 24, 25, 26 zu übertragen ist (erster Schritt des erfindungsgemäßen Verfahrens), und generiert die dritte Sessions-Kennungsinformation. Beispielsweise erkennt etwa eine Zollstation oder eine andere (Verkehrs-)Infrastruktureinrichtung (als Sender 20), dass mit der ersten und der (wenigstens) zweiten Gruppe von Kommunikationsteilnehmern (wenigstens) zwei Gruppen der gleichen V2X-Anwendung (insbesondere umfassend bzw. nutzend die gleiche Dienste-Kennungsinformation) vorhanden sind und eine Zusammenlegung sinnvoll ist. Dieser Prozess wird somit in einem dritten Prozessschritt 203 angestoßen. Der zweite Abschnitt 221 ist damit beendet; es beginnt der dritte Abschnitt 222.

Im dritten Abschnitt 222 wird in einem vierten Prozessschritt 204 die dritte Sessions-Kennungsinformation generiert. Ferner wird insbesondere eine Fahrzeug-Gruppen-information generiert, welche den Inhalt aufweist, dass sowohl hinsichtlich der ersten Gruppe als auch hinsichtlich der zweiten Gruppe von Kommunikationsteilnehmer eine Update-Information vorliegt bzw. eine Update erforderlich ist ("FZG-Gruppen-Info = Update(PKW-Gruppen-Info+LKW-Gruppen-Info)").

Im ersten Unterabschnitt 223 des dritten Abschnitts 222 wird sodann in einem fünften Prozessschritt 205 mittels einer weiteren Broadcast-Nachricht die Startnachricht umfassend die erste Sessions-Kennungsinformation, die zweite Sessions-Kennungsinformation und die dritte Sessions-Kennungsinformation seitens des Senders 20 ausgesendet (zweiter Schritt des erfindungsgemäßen Verfahrens). Insbesondere umfasst die Startnachricht im fünften Prozessschritt 205 neben der ersten, zweiten und dritten Sessions-Kennungsinformation auch die Dienste-Kennungsinformation, eine Identifikationsinformation des Senders 20 (etwa "Zoll"), eine dazugehörige Information (etwa "Zoll-Info"), die Fahrzeug-Gruppen-Information ("FZG-Gruppen-Info") sowie einen Nachrichteninhalt. Der erste Unterabschnitt 223 ist damit beendet; es beginnt der zweite Unterabschnitt 224.

Im zweiten Unterabschnitt 224 senden die Kommunikationsteilnehmer 21, 22, 23, 24, 25, 26 sowohl der ersten Gruppe von Kommunikationsteilnehmern (mittels der sechsten Prozessschritte 206, 206`, 206") als auch der zweiten Gruppe von Kommunikationsteilnehmern (mittels der siebten Prozessschritte 207, 207`, 207") jeweils eine Teilnahmenachricht, welche die dritte Sessions-Kennungsinformation umfasst (dritter Schritt des erfindungsgemäßen Verfahrens). Diese jeweiligen Teilnahmenachrichten werden vom Sender 20 empfangen und umfassen insbesondere die Dienste-Kennungsinformation, die dritte Sessions-Kennungsinformation, eine Identifikationsinformation des jeweiligen Kommunikationsteilnehmers 21, 22, 23, 24, 25, 26, eine dazugehörige Information, die Fahrzeug-Gruppen-Information sowie einen Nachrichteninhalt. Der zweite Unterabschnitt 224 ist damit beendet; es beginnt der dritte Unterabschnitt 225. Im dritten Unterabschnitt 225 kommunizieren die Kommunikationsteilnehmer 20, 21, 22, 23, 24, 25, 26 operativ als eine einzige Gruppe von Kommunikationsteilnehmern, deren Mitglieder darüber hinaus bekannt sind, zumindest dem initiierenden Sender 20. Insbesondere werden die vormalige erste und zweite Gruppe aufgelöst (vgl. Figur 3).

In Figur 3 ist schematisch ein Kommunikationsdiagramm zur Beendigung einer Gruppe von Kommunikationsteilnehmern (am Beispiel der ersten Gruppe von Kommunikationsteilnehmern) dargestellt.

Generell gliedert sich dieses Kommunikationsdiagramm im Wesentlichen in die verschiedenen Abschnitte 220, 226 und 227. Der erste Abschnitt 220 entspricht (mit dem ersten Prozessschritt 201) dem ersten Abschnitt gemäß Figur 2, d.h. es werden die Voraussetzungen geschaffen, insbesondere die Gruppe von Kommunikationsteilnehmern geschaffen bzw. aufgesetzt (wie erwähnt wird beispielhaft die erste Gruppe von Kommunikationsteilnehmern 20, 21, 22, 23 betrachtet).

Der vierte Abschnitt 226 umfasst den Trigger bzw. den Anstoß bzw. die Entscheidung zur Beendigung der Gruppe und der fünfte Abschnitt 227 umfasst die Durchführung dieser Entscheidung.

Im ersten Prozessschritt 201 wird - analog zur Darstellung gemäß Figur 2 - vorausgesetzt, dass die erste Gruppe von Kommunikationsteilnehmern 20, 21, 22, 23 existiert bzw. aufgesetzt ist, d.h. es ist erforderlich, die Grundlagen bzw. Grundvoraussetzungen zu schaffen, damit die Kommunikation der Kommunikationsteilnehmer 20, 21, 22, 23 erfolgen kann. Hierbei ist es im ersten Prozessschritt 201 oder als Teil des ersten Prozessschrittes 201 insbesondere vorgesehen, dass mittels einer jeweiligen Startnachricht diese Gruppe erzeugt bzw. gebildet wird sowie mittels jeweiliger Teilnahmenachrichten der entsprechenden Kommunikationsteilnehmer Gruppenmitglieder reagieren. Ebenfalls kann (jedoch nicht notwendigerweise) eine Dienste-Kennungsinformation verwendet werden. Der erste Abschnitt 220 ist damit beendet; es beginnt der vierte Abschnitt 226.

Im vierten Abschnitt 226 soll in einem achten Prozessschritt 208 die Gruppe von Kommunikationsteilnehmern beendet werden bzw. es wird erkannt, dass die Gruppe von Kommunikationsteilnehmern beendet werden soll. Der vierte Abschnitt 226 ist damit beendet; es beginnt der fünfte Abschnitt 227.

Im fünften Abschnitt 227 wird in einem neunten Prozessschritt 209 die erste Gruppe von Kommunikationsteilnehmern 20, 21, 22, 23 beendet, indem vom Sender 20 aus eine entsprechende Gruppennachricht bzw. Broadcast-Nachricht (etwa: "Beende PKW-Gruppe"), insbesondere umfassend die Dienste-Kennungsinformation, die erste Sessions-Kennungsinformation, eine Identifikationsinformation des Senders 20 (etwa "Zoll"), eine dazugehörige Information (etwa "Zoll-Info"), die Fahrzeug-Gruppen-information ("PKW-Gruppen-Info") sowie einen Nachrichteninhalt. Damit ist die erste Gruppe von Kommunikationsteilnehmern beendet bzw. aufgelöst.

Insbesondere erfolgt dies zu Beginn oder während des dritten Unterabschnitts 225 des dritten Abschnitts 222 gemäß Figur 2 zur Auflösung bzw. Beendigung der ersten Gruppe von Kommunikationsteilnehmern (wie in Figur 3 explizit dargestellt) bzw. in analoger Weise zur Auflösung bzw. Beendigung der zweiten Gruppe von Kommunikationsteilnehmern (wofür in Figur 3 der zweite, dritte und vierte Kommunikationsteilnehmer 21, 22, 23 durch den fünften, sechsten und siebten Kommunikationsteilnehmer 24, 25, 26 zu ersetzen wäre).

Nachfolgend wird anhand der Figur 4 und einer Reihe verschiedener Prozessschritte die zweite Variante des erfindungsgemäßen Verfahrens im Detail beschrieben:
In einem elften Prozessschritt 231 wird als Teil des ersten Abschnitts 220 zunächst vorausgesetzt, dass die erste Gruppe von Kommunikationsteilnehmern 20, 21, 22, 23 (beispielsweise eine Gruppe von Personenkraftwagen-Verkehrsteilnehmern, "PKW-Gruppe") und die zweite Gruppe von Kommunikationsteilnehmern 20, 24, 25, 26 (beispielsweise eine Gruppe von Lastkraftwagen-Verkehrsteilnehmern, "LKW-Gruppe") existieren bzw. aufgesetzt sind, d.h. es ist erforderlich, die Grundlagen bzw. Grundvoraussetzungen zu schaffen, damit die Kommunikation der Kommunikationsteilnehmer 20, 21, 22, 23, 24, 25, 26 in ihren jeweiligen Gruppen erfolgen kann. Hierbei ist es im elften Prozessschritt 231 oder als Teil des elften Prozessschrittes 231 insbesondere vorgesehen, dass mittels einer jeweiligen Startnachricht diese Gruppen erzeugt bzw. gebildet werden sowie mittels jeweiliger Teilnahmenachrichten der entsprechenden Kommunikationsteilnehmer Gruppenmitglieder reagieren. Insbesondere ist es erfindungsgemäß bevorzugt (jedoch nicht zwingend notwendig), dass eine Dienste-Kennungsinformation, welche insbesondere spezifisch für die V2X-Anwendung ist, zwischen den Kommunikationsteilnehmern 20, 21, 22, 23, 24, 25, 26 innerhalb der jeweiligen Gruppen von Kommunikationsteilnehmern verwendet wird. Der erste Abschnitt 220 ist damit beendet; es beginnt der zweite Abschnitt 221.

Im zweiten Abschnitt 221 erkennt in einem zwölften Prozessschritt 232 der Sender 20 (bzw. einer der Kommunikationsteilnehmer), dass der gleiche Nachrichteninhalt oder ein Nachrichteninhalt betreffend ein gleiches Nachrichtenthema sowohl in der ersten Gruppe von Kommunikationsteilnehmern 20, 21, 22, 23 als auch in der zweiten Gruppe von Kommunikationsteilnehmern 20, 24, 25, 26 zu übertragen ist (erster Schritt des erfindungsgemäßen Verfahrens), und generiert die dritte Sessions-Kennungsinformation. Beispielsweise erkennt etwa eine Zollstation oder eine andere (Verkehrs-)lnfrastruktureinrichtung (als Sender 20), dass mit der ersten und der (wenigstens) zweiten Gruppe von Kommunikationsteilnehmern (wenigstens) zwei Gruppen der gleichen V2X-Anwendung (insbesondere umfassend bzw. nutzend die gleiche Dienste-Kennungsinformation) vorhanden sind und eine Zusammenlegung bzw. die Bildung einer Obergruppe sinnvoll ist. Dieser Prozess wird somit in einem dreizehnten Prozessschritt 233 angestoßen. Der zweite Abschnitt 221 ist damit beendet; es beginnt der dritte Abschnitt 222.

Im dritten Abschnitt 222 wird in einem vierzehnten Prozessschritt 234 die dritte Sessions-Kennungsinformation generiert. Ferner wird insbesondere eine Fahrzeug-Gruppen-information generiert, welche den Inhalt aufweist, dass sowohl hinsichtlich der ersten Gruppe als auch hinsichtlich der zweiten Gruppe von Kommunikationsteilnehmer eine Update-Information vorliegt bzw. eine Update erforderlich ist ("FZG-Gruppen-Info = Update(PKW-Gruppen-Info+LKW-Gruppen-Info)").

Im ersten Unterabschnitt 223 des dritten Abschnitts 222 wird sodann in einem fünfzehnten Prozessschritt 235 mittels einer weiteren Broadcast-Nachricht die Startnachricht umfassend die erste Sessions-Kennungsinformation, die zweite Sessions-Kennungsinformation und die dritte Sessions-Kennungsinformation seitens des Senders 20 ausgesendet (zweiter Schritt des erfindungsgemäßen Verfahrens). Insbesondere umfasst die Startnachricht im fünfzehnten Prozessschritt 235 neben der ersten, zweiten und dritten Sessions-Kennungsinformation auch die Dienste-Kennungsinformation, eine Identifikationsinformation des Senders 20 (etwa "Zoll"), eine dazugehörige Information (etwa "Zoll-Info"), die Fahrzeug-Gruppen-Information ("FZG-Gruppen-Info") sowie einen Nachrichteninhalt. Der erste Unterabschnitt 223 ist damit beendet; es beginnt der zweite Unterabschnitt 224.

Im zweiten Unterabschnitt 224 senden die Kommunikationsteilnehmer 21, 22, 23, 24, 25, 26 sowohl der ersten Gruppe von Kommunikationsteilnehmern (mittels sechzehnter Prozessschritte 236, 236`, 236") als auch der zweiten Gruppe von Kommunikationsteilnehmern (mittels siebzehnter Prozessschritte 237, 237`, 237") jeweils eine Teilnahmenachricht, welche die dritte Sessions-Kennungsinformation umfasst (dritter Schritt des erfindungsgemäßen Verfahrens). Diese jeweiligen Teilnahmenachrichten werden vom Sender 20 empfangen und umfassen insbesondere die Dienste-Kennungsinformation, die dritte Sessions-Kennungsinformation, eine Identifikationsinformation des jeweiligen Kommunikationsteilnehmers 21, 22, 23, 24, 25, 26, eine dazugehörige Information, die Fahrzeug-Gruppen-Information sowie einen Nachrichteninhalt. Der zweite Unterabschnitt 224 ist damit beendet; es beginnt der dritte Unterabschnitt 225.

Im dritten Unterabschnitt 225 kommunizieren die Kommunikationsteilnehmer 20, 21, 22, 23, 24, 25, 26 operativ als eine einzige Gruppe bzw. Obergruppe von Kommunikationsteilnehmern, deren Mitglieder darüber hinaus bekannt sind, zumindest dem initiierenden Sender 20. Die vormaligen Gruppen (im Beispiel die erste und zweite Gruppe) werden im Gegensatz zur ersten Variante des erfindungsgemäßen Verfahrens gemäß Figur 2 (welche die Verschmelzung mehrerer Gruppen betrifft) nicht aufgelöst, sondern bleiben weiterhin - neben der zusätzlichen dritten Gruppe als Obergruppe - bestehen.

Erfindungsgemäß ist es somit vorteilhaft möglich, Gruppen von Kommunikationsteilnehmern zu ermöglichen und zu managen, insbesondere die Verschmelzung von zwei (oder mehr) Gruppen einer V2X-Anwendung (insbesondere um die Anzahl der Nachrichten und Datenmenge zu minimieren) zu realisieren und/oder eine Obergruppe zu existierenden Gruppen zu bilden (wobei insbesondere existierende Gruppen beibehalten werden), und dies basierend lediglich auf direkter V2X PC5 Sidelink Kommunikation - d.h. insbesondere ohne eine Einbindung von Mobilfunkinfrastrukturfür eine definierte V2X-Anwendung (bzw. die Umsetzung eines V2X Anwendungsfalls) mit einer Kommunikation (Informationsaustausch) innerhalb einer Gruppe bzw. Session (deren Teilnehmer (Kommunikationsteilnehmer) in der Gruppe identifiziert sind und bestimmte Eigenschaften dieser Identitäten bekannt sind), wobei insbesondere
-- die Gruppe aufzusetzen
-- Teilnehmer aufzunehmen und abzumelden,
-- Adressieren von Nachrichten an bestimmte Teilnehmer der Gruppe zu realisieren,
-- die Gruppe zu beenden als mögliche weitere Teile oder Aspekte des Gruppenmanagements implementierbar sind.

Hierbei ist es erfindungsgemäß insbesondere relevant, dass V2X-Nachrichten (PC5 Sidelink) grundsätzlich anonymisierte Broadcast Nachrichten sind, was bedeutet, dass ohne zusätzliche Mechanismen zum fehlenden Session-Management
-- jeder Kommunikationsteilnehmer bzw. Verkehrsteilnehmer im Empfangsbereich den Inhalt dieser Nachrichten lesen kann,
-- keine Authentisierung des jeweiligen Senders erfolgt (nur, dass der Sender in dem intelligenten Verkehrssystem bzw. innerhalb der V2X-Anwendung autorisiert ist, Nachrichten zu senden und dass diese authentisch sind),
-- der Empfang von Nachrichten nicht garantiert werden kann (beispielsweise weil ein Verkehrsteilnehmer den Empfangsbereich verlässt oder die Nachricht nicht empfangen wird) und
-- jeder Verkehrsteilnehmer im Umkreis "Gruppen-Nachrichten" versenden kann, auch wenn er kein Teil einer Gruppe ist.

Erfindungsgemäß ist beispielsweise vorgesehen, dass eine Zollstation jeweils eine V2X-Gruppe für PKW und LKW aufsetzt, in denen z.B. die notwendigen Zollpapiere, Wartezeiten (ggf. per Gruppenteilnehmer) oder allgemeine Information wie Wetter-/Verkehrslagen hinter der Zollstation /Verkehrsbedingen hinter der Zollstation von der Zollstation bekanntgegeben werden. Außerdem können die Gruppenteilnehmer auch Nachrichten in die Gruppe senden oder an spezielle andere Gruppenteilnehmer adressieren.

Erfindungsgemäß findet jedenfalls ein Gruppen-Management, jedoch insbesondere sowohl ein Session-Management als auch ein Gruppen-Management statt. Hinsichtlich des Session-Managements ist es insbesondere vorgesehen, dass auch eine nachträgliche Verfügbarkeit von verpassten V2X-Nachrichten realisiert wird. Um den V2X Anwendungsfall bzw. die V2X-Anwendung und die entsprechende Session identifizieren zu können, werden eine Dienste-Kennungsinformation "Service-ID" (ServID), die die V2X-Anwendung identifiziert, und eine Sessions-Kennungsinformation (Session-ID, SID) je V2X-Gruppe, die die V2X-Anwendung nutzt, definiert:
Die Dienste-Kennungsinformation, Service-ID, kann eine im V2X-Standard vorgesehene ID (bzw. Kennung bzw. Kennungsinformation) für einen bestimmten Anwendungsfall sein, aber auch eine ID für einen Service / eine Anwendung eines Dienstanbieters für spezifische V2X-Anwendungen.

Die Sessions-Kennungsinformation bww. die Gruppen-/Session-ID wird insbesondere von demjenigen Verkehrsteilnehmer (insbesondere der Sender 20) initiiert bzw. generiert, welcher die erste Nachricht innerhalb der Session sendet, d.h. welcher die Gruppe initiiert; dieser generiert eine (pseudozufällige) Kennung bzw. Kennungsinformation als Guppen-/Session-ID oder Sessions-Kennungsinformation.

Die Gruppenteilnehmer bzw. Verkehrsteilnehmer bzw. Kommunikationsteilnehmer sind über eine Teilnehmer ID identifizierbar; hierbei kann es sich bei der Verkehrsteilnehmer ID bzw. Kommunikationsteilnehmer ID um die ID des Verkehrsteilnehmers innerhalb der V2X-Anwendung oder auch eine für die V2X-Session vom Sender selbst vergebene ID handeln. Zu der Verkehrsteilnehmer-ID kann der Verkehrsteilnehmer erfindungsgemäß insbesondere weitere Eigenschaften "VT-ID-Info" über sich angeben. Die Informationen "VT-ID" und "VT-ID-Info" bieten anderen Verkehrsteilnehmer die Möglichkeit, Verkehrsteilnehmer nach gewissen Kriterien zu adressieren oder auf Basis der "VT-ID-Info" die Relevanz von Nachrichten von "VT-ID" für sich selbst einzuschätzen. Hierbei ist erfindungsgemäß insbesondere vorgesehen, dass "VT-ID" und "VT-ID-Info" informativ sind und ohne zusätzliche Mechanismen nicht autorisiert, authentisiert bzw. verifiziert werden können.

Zu den Kommunikationsvoraussetzungen gehört ferner, dass die teilnehmenden Verkehrsteilnehmer im Intelligent Transport System (ITS), welches den Anwendungsfall abdeckt, bzw. bei dem V2X-Service / der V2X-Anwendung des Diensteanbieters registriert sind und ggf. die notwenigen Sicherheitsmechanismen, wie z.B. Signierung mit pseudonymisierten Zertifikaten, unterstützen.

Beispielhaft werden zum Start einer V2X-Gruppe bzw. V2X-Session (bzw. zum Starten zweier solcher Gruppen) an einer Zollstation die beiden V2X-Gruppen "PKW" für Personenkraftwagen und "LKW" für Lastkraftwagen einer V2X-Anwendung zur Warteschlangenverwaltung (d.h. identifiziert durch die entsprechende Dienste-Kennungsinformation, ServID) gestartet.

Die Zollstation (als Sender 20) startet beispielsweise zuerst eine V2X-Gruppe/-Session "PKW" für die V2X-Anwendung (ServID) und erzeugt dafür eine Session-ID (SID-A bzw. erste Sessions-Kennungsinformation). Die initiale V2X-Nachricht enthält dann jeweils die Dienste-Kennungsinformation, die erste Sessions-Kennungsinformation (bzw. SID-A), die Sender-ID="Zollstation", Informationen über die Zollstation "Zoll-Info", die (initialen) Informationen über die Gruppe (PKW-Gruppen-Info), z.B. Name der Gruppe, Mitglieder (initial Zollstation), Zweck (insbesondere "für PKWs" und Regeln der Gruppe, und den eigentlichen Inhalt der Nachricht, hier den Start der Gruppe.

Im Folgenden können alle Verkehrsteilnehmer, die an dieser Session teilnehmen können und wollen (hier PKWs) - da sie für die V2X-Anwendung registriert sind sowie sich in der Empfangsumgebung des Senders Zollstation befinden -, entsprechende Nachrichten mit der Dienste-Kennungsinformation, der ersten Sessions-Kennungsinformation (SID-A), ihrer VT-ID= "PKWx", PKWx-Info (z.B. PKW-Typ, zu verzollende Ware, Fahrtziel, aktueller Standort, etc.), die aktualisierten PKW-Gruppen-Info (VT-ID), VT-Info und ggf. Inhalt" senden.

Da die Inhalte der V2X-Kommunikation (PC5 Sidelink) per se unverschlüsselt übertragen werden, können alle VT in der Umgebung die Inhalte "gelesen" werden. Damit können sich neue VT prinzipiell jederzeit der Gruppe anschließen oder auch nur der Gruppe "lauschen".

Anschließend oder parallel setzt die Zollstation auch die Gruppe "LKW" entsprechend auf.

Zum Beenden der V2X-Gruppe sendet die Zollstation eine entsprechende Nachricht; dies ist in Figur 3 beispielhaft dargestellt.

Das Versenden von Nachrichten betrifft beispielsweise V2X-Gruppen-Kommunikation, d.h. V2X-Nachrichten, welche von allen Verkehrsteilnehmer im Empfangsbereiche empfangen werden. Beispielsweise:
-- sendet die Zollstation Information an die Gruppe PKW, z.B. allgemeine Wartezeit PKW, Verkehrs- und Wetterlage hinter Zollstation, Währungs-Wechselkurs;
-- fragen ein PKW oder mehrere PKW (PKWx) die voraussichtliche Wartezeit an (mit PKWx-Info und Standort), Zollstation berechnet auf Grund der Daten von PKWx, PKW-Gruppen-Info und dem aktuellen Standort die voraussichtliche Wartezeit und sendet diese für PKWx;
-- erkennt PKWy aus der PKW-Gruppen-Info bzw. der PKWx-Info, dass PKWx und PKWy das gleiche Ziel haben und fragt Informationen zum Zielort an; PKWx sendet Informationen zum Zielort, z.B. Wetter oder eine Hotelempfehlung.
-- hat PKWz hat eine interessante Information für die Gruppe, z.B. ein Standortwechsel oder eine Pause in Restaurant
-- fragt PKWx in der Gruppe nach einer Information, z.B. Geldautomat an Zollstation; PKWx kann dies beantworten und sendet eine entsprechende Antwort für die Gruppe (mit Referenz auf PKWx bzw. der Anfrage).

Wie gemäß Figur 2 beschrieben ist es erfindungsgemäß gemäß einer ersten Variante der Erfindung vorgesehen, dass (sofern erkannt wird, dass zwei Gruppen der gleichen V2X-Anwendung (ServID, Dienste-Kennungsinformation) vorhanden sind und eine Zusammenlegung sinnvoll ist (beispielsweise, weil viele Nachrichten redundant für beide V2X-Gruppen versendet werden) zwei V2X-Gruppen zu einer Gruppe verschmolzen werden können.

Beispielsweise eine Zollstation erkennt dieses und erstellt eine neue Gruppe "FZG" ("Fahrzeuge", d.h. umfassend sowohl Personenkraftwagen als auch Lastkraftwagen) aus den zwei Gruppen "PKW" und "LKW". Hierfür generiert die Zollstation (d.h. der Sender 20) die dritte Sessions-Kennungsinformation als neue Session-ID (SID-C), insbesondere aus der Konkatenation der bisherigen Session-IDs, d.h. der ersten und zweiten Sessions-Kennungsinformation, (mithin "SID-C=SID-A∥SID-B") und die Gruppen-Informationen (FZG-Gruppen-Info) aus den bisherigen Gruppeninformationen (PKW-Gruppen-Info und LKW-Gruppen-Info) und entsprechenden Aktualisierungen und Erweiterungen. Zollstation sendet dann eine Nachricht (Startnachricht) mit der Verschmelzung der beiden Gruppen mit der (gemeinsamen) ServID, den beiden vorherigen SID (SID-A und SID-B), damit die VT die bisherigen Sessions identifizieren können, die neue Session-ID (SID-C), die eigene VT-ID=Zoll, Zoll-Info, die neue Gruppen-Information (FZG-Gruppen-Info) und ggf. noch Inhalt.

Die Verkehrsteilnehmer empfangen diese Nachricht, terminieren entweder (direkt bzw. unmittelbar) für sich oder aber durch eine weitere Beendigungsnachricht (vgl. Figur 3) die jeweilige "alte" Gruppe, senden ihre Teilnahmebestätigung und nehmen so an der neuen Gruppe "FZG" teil.

Wie gemäß Figur 4 beschrieben ist es erfindungsgemäß gemäß einer zweiten Variante der Erfindung vorgesehen, dass (sofern erkannt wird, dass zwei Gruppen der gleichen V2X-Anwendung (ServID, Dienste-Kennungsinformation) vorhanden sind und redundant viele Nachrichten, die für beide interessant sind, ausgetauscht werden) für diese Nachrichten eine Obergruppe gebildet wird. Die (nicht-redundanten) Gruppenspezifischen Nachrichten werden dann in den weiter existierenden Gruppen ausgetauscht. Der diesbezügliche Ablauf entspricht weitgehend dem der Gruppenverschmelzung, lediglich werden die ersten und zweiten Gruppen "PKW" und "LKW" nicht terminiert.

## Patentansprüche

1. Verfahren zum Übermitteln eines Nachrichteninhalts zwischen einer Mehrzahl von Kommunikationsteilnehmern (20, 21, 22, 23, 24, 25, 26), wobei sowohl ein Sender (20) als auch eine Mehrzahl von Empfängern (21, 22, 23, 24, 25, 26) Broadcast-Nachrichten zu senden in der Lage sind, wobei der Nachrichteninhalt wenigstens einer Broadcast-Nachricht des Senders (20) an eine Mehrzahl von Empfängern (21, 22, 23, 24, 25, 26) mittels der wenigstens einen Broadcast-Nachricht mittels einer PC5-Sidelink Funktionalität, insbesondere unter Nutzung der Mode-4-Funktionalität, gesendet wird,
wobei die Mehrzahl von Kommunikationsteilnehmern (20, 21, 22, 23, 24, 25, 26) eine erste Gruppe von Kommunikationsteilnehmern (20, 21, 22, 23) und eine zweite Gruppe von Kommunikationsteilnehmern (20, 24, 25, 26) umfasst, wobei in jeder Gruppe von Kommunikationsteilnehmern eine Mehrzahl an Broadcast-Nachrichten zwischen den Kommunikationsteilnehmern gesendet und empfangen werden, wobei die Mehrzahl dieser Broadcast-Nachrichten Teil einer Nachrichten-Session von Broadcast-Nachrichten mit einer Sessions-Kennungsinformation ist, wobei die erste Gruppe von Kommunikationsteilnehmern (20, 21, 22, 23) eine erste Sessions-Kennungsinformation und die zweite Gruppe von Kommunikationsteilnehmern (20, 24, 25, 26) eine zweite Sessions-Kennungsinformation aufweist,
**dadurch gekennzeichnet, dass** das Verfahren zum Übermitteln des Nachrichteninhalts für den Fall einer Übermittlung des gleichen Nachrichteninhalts sowohl in der ersten Gruppe von Kommunikationsteilnehmern (20, 21, 22, 23) als auch in der zweiten Gruppe von Kommunikationsteilnehmern (20, 24, 25, 26) die nachfolgenden Schritte umfasst:
-- in einem ersten Schritt erkennt der Sender (20), dass der gleiche Nachrichteninhalt oder ein Nachrichteninhalt betreffend ein gleiches Nachrichtenthema sowohl in der ersten Gruppe von Kommunikationsteilnehmern (20, 21, 22, 23) als auch in der zweiten Gruppe von Kommunikationsteilnehmern (20, 24, 25, 26) zu übertragen ist, und generiert eine dritte Sessions-Kennungsinformation,
-- in einem dem ersten Schritt nachfolgenden zweiten Schritt sendet der Sender (20) mittels einer weiteren Broadcast-Nachricht eine Startnachricht umfassend die erste Sessions-Kennungsinformation, die zweite Sessions-Kennungsinformation und die dritte Sessions-Kennungsinformation,
-- in einem dem zweiten Schritt nachfolgenden dritten Schritt senden die Kommunikationsteilnehmer sowohl der ersten als auch der zweiten Gruppe von Kommunikationsteilnehmern jeweils eine Teilnahmenachricht, welche die dritte Sessions-Kennungsinformation umfasst.

2. Verfahren nach Anspruch 1, **dadurch gekennzeichnet, dass** mittels der dritten Sessions-Kennungsinformation eine dritte Gruppe von Kommunikationsteilnehmern referenziert wird, wobei die dritte Gruppe von Kommunikationsteilnehmer die Kommunikationsteilnehmer der ersten und der zweiten Gruppe von Kommunikationsteilnehmer (20, 21, 22, 23, 24, 25, 26) umfasst.

3. Verfahren nach einem der vorhergehenden Ansprüche, **dadurch gekennzeichnet, dass** die Erkennung, dass der gleiche Nachrichteninhalt sowohl in der ersten Gruppe von Kommunikationsteilnehmern (20, 21, 22, 23) als auch in der zweiten Gruppe von Kommunikationsteilnehmern (20, 24, 25, 26) zu übertragen ist, anhand einer gleichen oder ähnlichen Dienste-Kennungsinformation der ersten und zweiten Gruppe von Kommunikationsteilnehmern (20, 21, 22, 23, 24, 25, 26) erfolgt.

4. Verfahren nach einem der vorhergehenden Ansprüche, **dadurch gekennzeichnet, dass** nach dem dritten Schritt die dritte Gruppe von Kommunikationsteilnehmer (20, 21, 22, 23, 24, 25, 26) sowohl neben der ersten Gruppe von Kommunikationsteilnehmern (20, 21, 22, 23) als auch neben der zweiten Gruppe von Kommunikationsteilnehmern (20, 24, 25, 26) vorliegt.

5. Verfahren nach einem der vorhergehenden Ansprüche, **dadurch gekennzeichnet, dass** nach dem dritten Schritt die dritte Gruppe von Kommunikationsteilnehmer (20, 21, 22, 23, 24, 25, 26) vorliegt und sowohl die erste Gruppe von Kommunikationsteilnehmern (20, 21, 22, 23) als auch die zweite Gruppe von Kommunikationsteilnehmern (20, 24, 25, 26) gelöscht oder aufgelöst ist.

6. Verfahren nach einem der vorhergehenden Ansprüche, **dadurch gekennzeichnet, dass** der Sender (20) ein stationärer Sender, insbesondere eine Mautstation oder eine Zollstation oder eine sonstige Einrichtung, ist, und dass die Empfänger (21, 22, 23, 24, 25, 26) mobile Verkehrsteilnehmer sind.

7. System zum Übermitteln eines Nachrichteninhalts zwischen einer Mehrzahl von Kommunikationsteilnehmern (20, 21, 22, 23, 24, 25, 26), wobei sowohl ein Sender (20) als auch eine Mehrzahl von Empfängern (21, 22, 23, 24, 25, 26) Broadcast-Nachrichten zu senden in der Lage sind, wobei der Nachrichteninhalt wenigstens einer Broadcast-Nachricht des Senders (20) an eine Mehrzahl von Empfängern (21, 22, 23, 24, 25, 26) mittels der wenigstens einen Broadcast-Nachricht mittels einer PC5-Sidelink Funktionalität, insbesondere unter Nutzung der Mode-4-Funktionalität, gesendet wird,
wobei die Mehrzahl von Kommunikationsteilnehmern (20, 21, 22, 23, 24, 25, 26) eine erste Gruppe von Kommunikationsteilnehmern (20, 21, 22, 23) und eine zweite Gruppe von Kommunikationsteilnehmern (20, 24, 25, 26) umfasst, wobei in jeder Gruppe von Kommunikationsteilnehmern eine Mehrzahl an Broadcast-Nachrichten zwischen den Kommunikationsteilnehmern gesendet und empfangen werden, wobei die Mehrzahl dieser Broadcast-Nachrichten Teil einer Nachrichten-Session von Broadcast-Nachrichten mit einer Sessions-Kennungsinformation ist, wobei die erste Gruppe von Kommunikationsteilnehmern (20, 21, 22, 23) eine erste Sessions-Kennungsinformation und die zweite Gruppe von Kommunikationsteilnehmern (20, 24, 25, 26) eine zweite Sessions-Kennungsinformation aufweist,
**dadurch gekennzeichnet, dass** das System derart konfiguriert ist, dass für den Fall einer Übermittlung des gleichen Nachrichteninhalts sowohl in der ersten Gruppe von Kommunikationsteilnehmern (20, 21, 22, 23) als auch in der zweiten Gruppe von Kommunikationsteilnehmern (20, 24, 25, 26):
-- der Sender (20) erkennt, dass der gleiche Nachrichteninhalt sowohl in der ersten Gruppe von Kommunikationsteilnehmern (20, 21, 22, 23) als auch in der zweiten Gruppe von Kommunikationsteilnehmern (20, 24, 25, 26) zu übertragen ist, und eine dritte Sessions-Kennungsinformation generiert,
-- der Sender (20) mittels einer weiteren Broadcast-Nachricht eine Startnachricht umfassend die erste Sessions-Kennungsinformation, die zweite Sessions-Kennungsinformation und die dritte Sessions-Kennungsinformation sendet, und
-- die Kommunikationsteilnehmer sowohl der ersten als auch der zweiten Gruppe von Kommunikationsteilnehmern jeweils eine Teilnahmenachricht senden, welche die dritte Sessions-Kennungsinformation umfasst.

8. Kommunikationsteilnehmer in Form eines Senders (20) und eines Empfängers (21,22,23,24,25,26), ausgestattet die Schritte eines Verfahrens nach einem der Ansprüche 1 bis 6 durchzuführen.

9. Computerprogramm umfassend Befehle zur Durchführung der Schritte eines Verfahrens nach einem der Ansprüche 1 bis 6, wenn das Computerprogramm auf einem Netzknoten in Form eines Senders und eines Empfängers ausgeführt wird.

10. Computerlesbares Medium, das Computerprogramm nach Anspruch 9 speichernd oder Datenträgersignal, das Computerprogramm nach Anspruch 9 tragend.

## Claims

1. Method for conveying message content between a plurality of communication participants (20, 21, 22, 23, 24, 25, 26), both a transmitter (20) and a plurality of receivers (21, 22, 23, 24, 25, 26) being capable of sending broadcast messages, the message content of at least one broadcast message of the transmitter (20) being sent to a plurality of receivers (21, 22, 23, 24, 25, 26) by means of the at least one broadcast message by means of a PC5 sidelink functionality, in particular using Mode 4 functionality, the plurality of communication participants (20, 21, 22, 23, 24, 25, 26) comprising a first group of communication participants (20, 21, 22, 23) and a second group of communication participants (20, 24, 25, 26), a plurality of broadcast messages being sent and received between the communication participants in each group of communication participants, the plurality of these broadcast messages being part of a message session of broadcast messages having a session identifier, the first group of communication participants (20, 21, 22, 23) having a first session identifier and the second group of communication participants (20, 24, 25, 26) having a second session identifier,
**characterised in that** the method for conveying message content, in the event that the same message content is conveyed both in the first group of communication participants (20, 21, 22, 23) and in the second group of communication participants (20, 24, 25, 26), comprises the following steps:
- in a first step, the transmitter (20) detects that the same message content or message content relating to an identical message topic is to be transmitted both in the first group of communication participants (20, 21, 22, 23) and in the second group of communication participants (20, 24, 25, 26), and generates a third session identifier,
- in a second step following the first step, the transmitter (20) sends, by means of a further broadcast message, a start message comprising the first session identifier, the second session identifier and the third session identifier, and
- in a third step following the second step, the communication participants of both the first and the second group of communication participants each send a participation message comprising the third session identifier.

2. Method according to claim 1, **characterised in that** the third session identifier references a third group of communication participants, the third group of communication participants comprising the communication participants of the first and second groups of communication participants (20, 21, 22, 23, 24, 25, 26).

3. Method according to either of the preceding claims, **characterised in that** the fact that the same message content is to be transmitted both in the first group of communication participants (20, 21, 22, 23) and in the second group of communication participants (20, 24, 25, 26) is detected from an identical or similar service identifier of the first and second groups of communication participants (20, 21, 22, 23, 24, 25, 26).

4. Method according to any of the preceding claims, **characterised in that**, after the third step, the third group of communication participants (20, 21, 22, 23, 24, 25, 26) is present both alongside the first group of communication participants (20, 21, 22, 23) and alongside the second group of communication participants (20, 24, 25, 26) .

5. Method according to any of the preceding claims, **characterised in that**, after the third step, the third group of communication participants (20, 21, 22, 23, 24, 25, 26) is present, and both the first group of communication participants (20, 21, 22, 23) and the second group of communication participants (20, 24, 25, 26) are deleted or dissolved.

6. Method according to any of the preceding claims, **characterised in that** the transmitter (20) is a stationary transmitter, in particular a toll station or customs station or other facility, and **in that** the receivers (21, 22, 23, 24, 25, 26) are mobile road users.

7. System for conveying message content between a plurality of communication participants (20, 21, 22, 23, 24, 25, 26), both a transmitter (20) and a plurality of receivers (21, 22, 23, 24, 25, 26) being capable of sending broadcast messages, the message content of at least one broadcast message of the transmitter (20) being sent to a plurality of receivers (21, 22, 23, 24, 25, 26) by means of the at least one broadcast message by means of a PC5 sidelink functionality, in particular using Mode 4 functionality, the plurality of communication participants (20, 21, 22, 23, 24, 25, 26) comprising a first group of communication participants (20, 21, 22, 23) and a second group of communication participants (20, 24, 25, 26), a plurality of broadcast messages being sent and received between the communication participants in each group of communication participants, the plurality of these broadcast messages being part of a message session of broadcast messages having a session identifier, the first group of communication participants (20, 21, 22, 23) having a first session identifier and the second group of communication participants (20, 24, 25, 26) having a second session identifier,
**characterised in that** the system is configured in such a way that, in the event that the same message content is conveyed both in the first group of communication participants (20, 21, 22, 23) and in the second group of communication participants (20, 24, 25, 26):
- the transmitter (20) detects that the same message content is to be transmitted both in the first group of communication participants (20, 21, 22, 23) and in the second group of communication participants (20, 24, 25, 26), and generates a third session identifier,
- the transmitter (20) sends, by means of a further broadcast message, a start message comprising the first session identifier, the second session identifier and the third session identifier, and
- the communication participants of both the first and the second group of communication participants each send a participation message comprising the third session identifier.

8. Communication participant in the form of a transmitter (20) and a receiver (21, 22, 23, 24, 25, 26), configured to carry out the steps of a method according to any of claims 1 to 6.

9. Computer program comprising commands for carrying out the steps of a method according to any of claims 1 to 6 when the computer program is executed on a network node in the form of a transmitter and receiver.

10. Computer-readable medium storing the computer program according to claim 9 or data carrier signal carrying the computer program according to claim 9.

## Revendications

1. Procédé de transmission d'un contenu de message entre une pluralité de partenaires de communication (20, 21, 22, 23, 24, 25, 26), dans lequel à la fois un émetteur (20) et une pluralité de récepteurs (21, 22, 23, 24, 25, 26) sont en mesure d'envoyer des messages de diffusion, dans lequel le contenu de message d'au moins un message de diffusion de l'émetteur (20) est envoyé à une pluralité de récepteurs (21, 22, 23, 24, 25, 26) au moyen dudit au moins un message de diffusion au moyen d'une fonctionnalité sidelink PC5, en particulier en utilisant la fonctionnalité mode 4,
dans lequel la pluralité de partenaires de communication (20, 21, 22, 23, 24, 25, 26) comprend un premier groupe de partenaires de communication (20, 21, 22, 23) et un deuxième groupe de partenaires de communication (20, 24, 25, 26), dans lequel, dans chaque groupe de partenaires de communication, une pluralité de messages de diffusion sont envoyés et reçus entre les partenaires de communication, dans lequel la pluralité de ces messages de diffusion fait partie d'une session de messages de diffusion avec une information d'identification de session, dans lequel le premier groupe de partenaires de communication (20, 21, 22, 23) présente une première information d'identification de session et le deuxième groupe de partenaires de communication (20, 24, 25, 26) présente une deuxième information d'identification de session,
**caractérisé en ce que**
dans le cas d'une transmission du même contenu de message à la fois dans le premier groupe de partenaires de communication (20, 21, 22, 23) et dans le deuxième groupe de partenaires de communication (20, 24, 25, 26), le procédé de transmission du contenu de message comprend les étapes suivantes :
- dans une première étape, l'émetteur (20) reconnaît que le même contenu de message ou un contenu de message concernant un même sujet de message doit être transmis à la fois dans le premier groupe de partenaires de communication (20, 21, 22, 23) et dans le deuxième groupe de partenaires de communication (20, 24, 25, 26), et génère une troisième information d'identification de session,
- dans une deuxième étape suivant la première étape, l'émetteur (20) envoie, au moyen d'un autre message de diffusion, un message de départ comprenant la première information d'identification de session, la deuxième information d'identification de session et la troisième information d'identification de session,
- dans une troisième étape suivant la deuxième étape, les partenaires de communication à la fois du premier et du deuxième groupe de partenaires de communication envoient chacun un message de participation qui comprend la troisième information d'identification de session.

2. Procédé selon la revendication 1, **caractérisé en ce qu'**un troisième groupe de partenaires de communication est référencé au moyen de la troisième information d'identification de session, dans lequel le troisième groupe de partenaires de communication comprend les partenaires de communication du premier et du deuxième groupe de partenaires de communication (20, 21, 22, 23, 24, 25, 26).

3. Procédé selon l'une des revendications précédentes, **caractérisé en ce que** la reconnaissance du fait que le même contenu de message doit être transmis à la fois dans le premier groupe de partenaires de communication (20, 21, 22, 23) et dans le deuxième groupe de partenaires de communication (20, 24, 25, 26) est effectuée sur la base d'une information d'identification de service identique ou similaire des premier et deuxième groupes de partenaires de communication (20, 21, 22, 23, 24, 25, 26).

4. Procédé selon l'une des revendications précédentes, **caractérisé en ce qu'**après la troisième étape, le troisième groupe de partenaires de communication (20, 21, 22, 23, 24, 25, 26) est présent à la fois au côté du premier groupe de partenaires de communication (20, 21, 22, 23) et au côté du deuxième groupe de partenaires de communication (20, 24, 25, 26).

5. Procédé selon l'une des revendications précédentes, **caractérisé en ce qu'**après la troisième étape, le troisième groupe de partenaires de communication (20, 21, 22, 23, 24, 25, 26) est présent et à la fois le premier groupe de partenaires de communication (20, 21, 22, 23) et le deuxième groupe de partenaires de communication (20, 24, 25, 26) sont supprimés ou dissous.

6. Procédé selon l'une des revendications précédentes, **caractérisé en ce que** l'émetteur (20) est un émetteur stationnaire, en particulier un poste de péage ou un poste de douane ou un autre équipement, et **en ce que** les récepteurs (21, 22, 23, 24, 25, 26) sont des usagers de la route mobiles.

7. Système de transmission d'un contenu de message entre une pluralité de partenaires de communication (20, 21, 22, 23, 24, 25, 26), dans lequel à la fois un émetteur (20) et une pluralité de récepteurs (21, 22, 23, 24, 25, 26) sont en mesure d'envoyer des messages de diffusion, dans lequel le contenu de message d'au moins un message de diffusion de l'émetteur (20) est envoyé à une pluralité de récepteurs (21, 22, 23, 24, 25, 26) au moyen dudit au moins un message de diffusion au moyen d'une fonctionnalité sidelink PC5, en particulier en utilisant la fonctionnalité mode 4, dans lequel la pluralité de partenaires de communication (20, 21, 22, 23, 24, 25, 26) comprend un premier groupe de partenaires de communication (20, 21, 22, 23) et un deuxième groupe de partenaires de communication (20, 24, 25, 26), dans lequel, dans chaque groupe de partenaires de communication, une pluralité de messages de diffusion sont envoyés et reçus entre les partenaires de communication, dans lequel la pluralité de ces messages de diffusion fait partie d'une session de messages de diffusion avec une information d'identification de session, dans lequel le premier groupe de partenaires de communication (20, 21, 22, 23) présente une première information d'identification de session et le deuxième groupe de partenaires de communication (20, 24, 25, 26) présente une deuxième information d'identification de session,
**caractérisé en ce que**
le système est configuré de telle sorte que, dans le cas d'une transmission du même contenu de message à la fois dans le premier groupe de partenaires de communication (20, 21, 22, 23) et dans le deuxième groupe de partenaires de communication (20, 24, 25, 26) :
- l'émetteur (20) reconnaît que le même contenu de message doit être transmis à la fois dans le premier groupe de partenaires de communication (20, 21, 22, 23) et dans le deuxième groupe de partenaires de communication (20, 24, 25, 26), et génère une troisième information d'identification de session,
- l'émetteur (20) envoie, au moyen d'un autre message de diffusion, un message de départ comprenant la première information d'identification de session, la deuxième information d'identification de session et la troisième information d'identification de session, et
- les partenaires de communication à la fois du premier et du deuxième groupe de partenaires de communication envoient chacun un message de participation qui comprend la troisième information d'identification de session.

8. Partenaires de communication sous la forme d'un émetteur (20) et d'un récepteur (21, 22, 23, 24, 25, 26) équipés pour exécuter les étapes d'un procédé selon l'une des revendications 1 à 6.

9. Programme d'ordinateur comprenant des instructions pour exécuter les étapes d'un procédé selon l'une des revendications 1 à 6, lorsque le programme d'ordinateur est exécuté sur un nœud de réseau sous la forme d'un émetteur et d'un récepteur.

10. Support lisible par ordinateur stockant le programme d'ordinateur selon la revendication 9 ou signal de support de données portant le programme d'ordinateur selon la revendication 9.
